# DEMANDE DE BREVET EUROPEEN

(11) **EP 0 978 783 A1**
(43) Date de publication de la demande: **09.02.2000**
(21) Numéro de dépôt: 99401474.4
(22) Date de dépôt: 15.06.1999
(51) Int. Cl.: G06F 9/38

(54) **Procédé de gestion de l'exécution d'un programme dans un dispositif à circuit intégré**

(30) Priorité: 15.06.1998 FR 9807529
(71) Demandeur: SCHLUMBERGER Systèmes, 92120 Montrouge (FR)
(72) Inventeur: Fornas, Thierry M., 94230 Cachan (FR)
(74) Mandataire: Lemoyne, Didier

(57) **Abrégé**

L'invention concerne un procédé de gestion de l'exécution concomitante, dans un dispositif à circuit intégré destiné à être intégré au sein d'un corps d'objet portatif, d'une part, d'un programme comprenant une ou plusieurs instructions, une des desdites instructions faisant appel à une ou plusieurs et, le cas échéant, à une ou plusieurs sous-routines, et, d'autre part, d'une instruction Iₓ faisant appel à une ou plusieurs routines et, le cas échéant, à une ou plusieurs sous-routines selon lequel procédé, une adresse de la routine ou une adresse de la sous-routine, est enregistrée dans une première mémoire de sauvegarde d'adresses de retour. Selon l'invention, pour l'exécution du programme, une adresse ADD d'une instruction, une adresse d'une routine ou une adresse d'une sous-routine, est enregistrée dans une seconde mémoire de sauvegarde d'adresses de retour, la première mémoire de sauvegarde d'adresses de retour étant différente de la seconde mémoire de sauvegarde d'adresses de retour, et, en ce qu'on exécute une fonction de sauvegarde enregistrant une adresse d'une routine dans la seconde mémoire et réinitialisant la première mémoire de sauvegarde d'adresses de retour. L'invention s'applique, en particulier, aux modules d'identification abonnés SIM.

## Description

L'invention concerne un procédé de gestion de l'exécution d'un programme dans un dispositif à circuit intégré et, en particulier, dans une puce d'un objet portatif au format carte à puce ou au format plus réduit prévue pour des modules d'identification abonné (SIM).

Les dispositifs à circuit intégré sont utilisés notamment dans des applications sécuritaires au sein de cartes ou de modules SIM. Ils comportent une unité centrale de traitement (CPU) qui assure la gestion de données entre des mémoires ROM, RAM, EEPROM ou Flash PROM dudit dispositif, par l'intermédiaire de bus de données et d'adresses.

Ces dispositifs sont de plus en plus performants. En effet, ils sont cadencés à des vitesses de plus en plus élevées, les temps de lecture et/ou d'écriture des mémoires qu'ils comportent sont sensiblement diminués et la taille desdites mémoires est de plus en plus importante. Par ailleurs, ces dispositifs reconnaissent et exécutent des programmes rédigés dans des langages informatiques de haut niveau. Il s'agit notamment de langages informatiques dérivés des langages Java®, C ou C++. On estime ainsi, qu'à court ou moyen terme, ces dispositifs seront susceptibles de gérer des programmes de l'ordre de 64 kilo-octets.

De tels programmes sont constitués d'instructions dites instructions cartes. L'exécution de ces instructions nécessite habituellement l'exécution de routines voire de sous-routines implémentées dans les dispositifs à circuit intégré sous forme logicielle, en EEPROM ou en ROM. Ces routines et/ou sous-routines renvoient à l'exécution d'instructions de bas niveau comprises par la CPU.

Dans la suite de la présente description, on utilisera le terme instruction pour désigner une instruction carte.

Pour l'exécution d'un programme et, par suite, pour l'exécution d'instructions, de routines et de sous-routines auxquelles fait appel ledit programme, on dispose, de manière classique, d'un espace mémoire formant une pile (Stack en anglo-saxon). Cette pile permet à la CPU d'exécuter une instruction, routine ou sous-routine sans perte des adresses de retour auxquelles il faudra revenir pour l'exécution des routines ou sous-routines en suivant dans le déroulement de chaque instruction du programme.

Néanmoins, lors de l'exécution du programme, le dispositif à circuit intégré est susceptible de recevoir des instructions qui n'ont pas de lien avec le programme. Ledit dispositif doit ainsi gérer, de manière concomitante, l'exécution des instructions du programme et les instructions reçues.

Cette gestion, assurée de la manière classique précitée à l'aide de la mémoire de sauvegarde d'adresses de retour, conduit à une perte du contexte propre aux instructions du programme, l'exécution de l'instruction qui n'a pas de lien avec le programme impliquant une perte des données du contexte de l'instruction exécutée précédemment dans le déroulement du programme.

Considérant ce qui précède, un problème que se propose de résoudre l'invention est de faire en sorte que la gestion de l'exécution d'une instruction d'un programme soit permise sans perte du contexte propre audit programme, méme dans le cas où ledit dispositif recevrait des instructions qui n'ont pas de lien avec ledit programme.

La solution de l'invention au problème précité a pour objet un procédé de gestion de l'exécution concomitante, dans un dispositif à circuit intégré destiné à être intégré au sein d'un corps d'objet portatif, comportant une unité centrale de traitement et une mémoire, d'une part, d'un programme PRG comprenant une ou plusieurs instructions I₁(PRG),..., Iₙ(PRG),..., I_{N}(PRG), une des desdites instructions faisant appel à une ou plusieurs routines R₁(Iₙ(PRG)), ..., Rₚ(Iₙ(PRG)), ..., Rₚ(Iₙ(PRG)) et, le cas échéant, à une ou plusieurs sous-routines SR₁(Rₚ(Iₙ(PRG))), ..., SR_{q}(Rₚ(Iₙ(PRG))), ..., SR_{Q}(Rₚ(Iₙ(PRG))), et, d'autre part, d'une instruction Iₓ faisant appel à une ou plusieurs routines R₁(Iₓ), ..., R_{y}(Iₓ), ..., R_{Y}(Iₓ) et, le cas échéant, à une ou plusieurs sous-routines SR₁(Ry(Iₓ)), ..., SR_{z}(R_{y}(Iₓ)), ..., SR_{Z}(R_{y}(Iₓ)) selon lequel procédé, une adresse ADD[(Iₓ)] de l'instruction Iₓ, une adresse ADD[(R_{y}(Iₓ))] de la routine R_{y}(Iₓ) ou une adresse ADD[SR_{z}(R_{y}(Iₓ))] de la sous-routine SR_{z}(R_{y}(Iₓ)) est enregistrée dans une première mémoire de sauvegarde d'adresses de retour, caractérisé en ce que, pour l'exécution du programme PRG, une adresse ADD[Iₙ(PRG)] d'une instruction Iₙ(PRG), une adresse ADD[Rₚ(Iₙ(PRG))] d'une routine Rₚ(Iₙ(PRG)) ou une adresse ADD[SR_{q}(Rₚ(Iₙ(PRG)))] d'une sous-routine SR_{q}(Rₚ(Iₙ(PRG))), est enregistrée dans une seconde mémoire de sauvegarde d'adresses de retour, la première mémoire de sauvegarde d'adresses de retour étant différente de la seconde mémoire de sauvegarde d'adresses de retour, et, en ce qu'on exécute une fonction de sauvegarde, enregistrant, d'une part, une adresse ADD[Iₙ(PRG)] d'une instruction Iₙ(PRG), une adresse ADD[Rₚ(Iₙ(PRG))] d'une routine Rₚ(Iₙ(PRG)) ou une adresse ADD[SR_{q}(Rₚ(Iₙ(PRG)))] d'une sous-routine SR_{q}(Rₚ(Iₙ(PRG))) dans la seconde mémoire de sauvegarde d'adresses de retour, et, réinitialisant, d'autre part, la premiére mémoire de sauvegarde d'adresses de retour.

L'invention sera mieux comprise à la lecture de l'exposé non limitatif qui suit, rédigé au regard des dessins qui l'accompagne, dans lesquels :

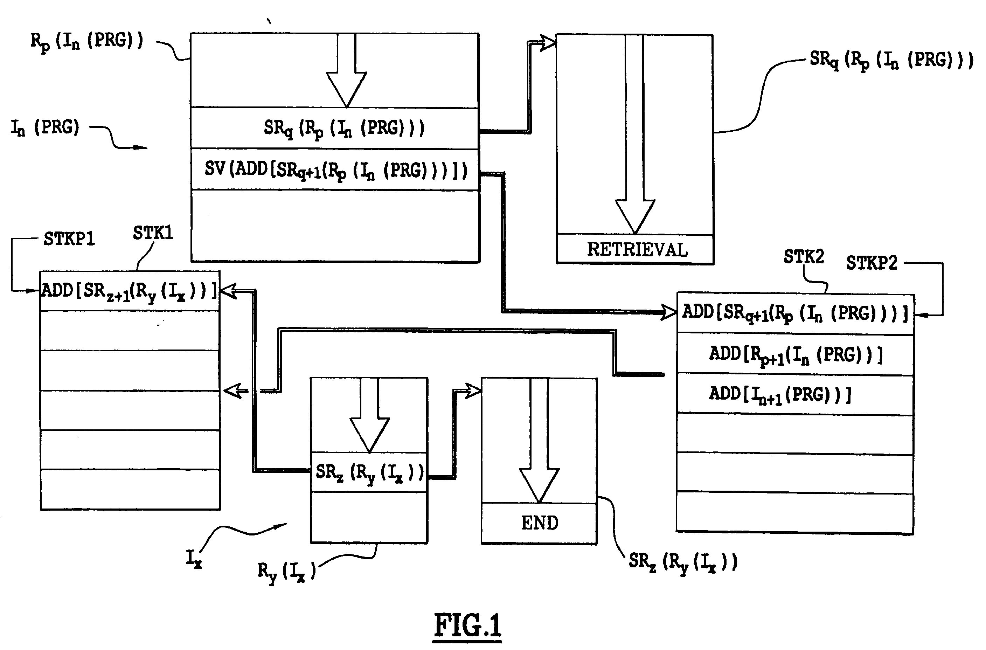

- la figure 1 résume, de manière schématique, un mode de réalisation du procédé de l'invention.

Les dispositifs à circuit intégré selon l'invention sont des puces destinées à être intégrées au sein de corps d'objets portatifs au format carte ou jeton, ou alors, dans des formats autres. La plupart de ces objets ont des caractéristiques définies notamment dans les normes ISO 78-10, 78-16, GSM 11.11 et 11.14 ou projet de norme ISO 14443, le contenu desdites normes étant intégré au présent exposé de l'invention, par citation de références.

On se référera, dans la suite de cet exposé, à l'exemple d'un module d'identification abonné (module SIM).

Un tel module SIM comprend un dispositif à circuit intégré qui comporte une unité centrale de traitement (CPU), ladite CPU assurant, par l'intermédiaire de bus de données et d'adresses, la gestion des données entre des mémoires non volatiles ROM, volatiles RAM et non volatiles programmables et effaçables électriquement EEPROM ou Flash PROM dudit dispositif.

Un ou plusieurs programmes PRG peuvent être chargés résidents dans une mémoire du module SIM, notamment dans sa mémoire EEPROM.

Un programme PRG se compose d'une ou plusieurs instructions I₁(PRG),..., Iₙ(PRG),..., I_{N}(PRG), n et N étant des nombres entiers supérieurs ou égaux à 1. Le programme PRG est rédigé en langage de haut niveau. Ces instructions peuvent par exemple être constituées de byte codes résultant d'une pré-compilation puis d'un traitement d'instructions Java®. Elles peuvent être rédigées en langage C ou C++ ou tout autre langage de haut niveau.

Pour l'exécution d'une instruction Iₙ(PRG), il est généralement fait appel à une ou plusieurs routines R₁(Iₙ(PRG)), ..., Rₚ(Iₙ(PRG)), ..., R_{P}(Iₙ(PRG)), p et P étant des nombres entiers supérieurs ou égaux à 1.

Par ailleurs, pour son exécution, une routine Rₚ(Iₙ(PRG)) est susceptible de faire appel à une ou plusieurs sous-routines SR₁(Rₚ(Iₙ(PRG))), ..., SR_{q}(Rₚ(Iₙ(PRG))), ..., SR_{Q}(Rₚ(Iₙ(PRG))), q et Q étant des nombres entiers supérieurs ou égaux à 1. Il en va de même et ainsi de suite pour l'exécution des sous-routines SR_{q}(Rₚ(Iₙ(PRG))), celles-ci pouvant en effet faire appel à d'autres sous-routines.

En pratique, les routines et sous-routines d'un programme sont utilisées dans un voire plusieurs autres programmes. On limite ainsi l'espace mémoire utile pour l'enregistrement de plusieurs programmes dans un module selon l'invention.

Lorsque le module SIM est connecté à un équipement mobile, par exemple un téléphone mobile, ledit module SIM est susceptible de recevoir, dudit équipement mobile, des instructions Iₓ qui n'ont pas de lien avec le programme PRG.

De telles instructions Iₓ sont listées par exemple dans la norme précitée GSM 11.11. On citera par exemple les instructions SELECT ou READ BINARY.

Ces instructions Iₓ font en général appel à une ou plusieurs routines R₁(Iₓ), ..., R_{y}(Iₓ), ..., R_{Y}(Iₓ), y et Y étant des nombres entiers supérieurs ou égaux à 1. De plus, de même que dans le cas précédemment décrit, les routines R_{y}(Iₓ) font appel, le cas échéant, à une ou plusieurs sous-routines SR₁(R_{y}(Iₓ)), ..., SR_{z}(R_{y}(Iₓ)), ..., SR_{z}(R_{y}(Iₓ)), lesdites sous-routines faisant elles-mêmes parfois appel à d'autres sous-routines et ainsi de suite.

Selon l'invention, pour la gestion de l'exécution concomitante, dans le module SIM, d'une part, du programme PRG et, d'autre part, d'une instruction Iₓ qui n'a pas de lien avec le programme PRG, on utilise deux mémoires de sauvegarde d'adresses de retour, une première mémoire de sauvegarde d'adresses de retour STK1 et une seconde mémoire de sauvegarde d'adresses de retour STK2, la première mémoire STK1 étant différente de la seconde mémoire STK2. La première mémoire STK1 est une mémoire classique, implémentée en hardware masque, intrinsèque au dispositif à circuit intégré, alors que la seconde mémoire STK2 est une mémoire logicielle, implémentée en masque logiciel, comprise dans une mémoire volatile RAM ou non volatile EEPROM du dispositif à circuit intégré. Avantageusement, la seconde mémoire STK2 est comprise dans la mémoire non volatile EEPROM. Ceci permet, dans le cas où la mémoire volatile a une faible capacité, notamment de l'ordre de cent vingt huit octets, de ne pas l'utiliser pour la seconde mémoire STK2.

Chacune des deux mémoires comporte un pointeur STKP1 et STKP2 qui pointe l'adresse de retour à laquelle il faudra revenir en premier lieu pour l'exécution du programme PRG ou de l'instruction Iₓ. Il s'agit, en pratique, de la dernière adresse enregistrée dans les mémoires.

Les adresses ADD[(Iₓ₎] des instructions I_{x,} les adresses ADD[(R_{y}(Iₓ)] des routines R_{y}(Iₓ) des instructions Iₓ voire les adresses ADD[SR_{z}(R_{y}(Iₓ))] des sous-routines SR_{z}(R_{y}(Iₓ)) desdites instructions sont uniquement enregistrées dans la première mémoire classique STK1.

Par contre, les adresses ADD[Iₙ(PRG)] des instructions Iₙ(PRG), les adresses ADD[Rₚ(Iₙ(PRG))] des routines Rₚ(Iₙ(PRG)) et les adresses ADD[SR_{q}(Rₚ(Iₙ(PRG)))] des sous-routines SR_{q}(Rₚ(Iₙ(PRG))) desdites instructions Iₙ(PRG) sont enregistrées, en particulier, dans la seconde mémoire logicielle STK2.

Le procédé de l'invention est mis en oeuvre de la manière décrite ci-après, au regard d'un cas particulier de l'exécution d'un programme PRG résident dans le module SIM et ce, concomitamment avec l'exécution d'une instruction carte classique Iₓ envoyée par l'équipement mobile au SIM.

Dans ce cas particulier, l'exécution du programme PRG nécessite l'exécution d'une instruction Iₙ(PRG) et d'une instruction Iₙ₊₁(PRG), l'instruction Iₙ(PRG) nécessitant elle-même l'exécution des routines Rₚ(Iₙ(PRG)) et Rₚ₊₁(Iₙ(PRG)), l'exécution de la routine Rₚ(Iₙ(PRG)) nécessitant elle-même l'exécution des sous-routines SR_{q}(Rₚ(Iₙ(PRG))) et SR_{q+1}(RₚIₙ(PRG))). Par ailleurs, l'exécution de l'instruction Iₓ nécessite quant à elle l'exécution des routines R_{y}(Iₓ) et R_{y+1}(Iₓ), l'exécution de la routine R_{y}(Iₓ) nécessitant elle-même l'exécution de sous-routines SR_{z}(R_{y}(Iₓ)) et SR_{z+1}(R_{y}(Iₓ)).

Selon l'invention, l'adresse ADD[Iₙ₊₁(PRG)] de l'instruction Iₙ₊₁(PRG), qui doit être exécutée à la suite de l'instruction Iₙ(PRG), est automatiquement, et de manière classique, enregistrée dans la mémoire classique STK1. De même, l'adresse ADD[Rₚ₊₁(Iₙ(PRG))] de la routine Rₚ₊₁(Iₙ(PRG)), qui doit être exécutée à la suite de la routine Rₚ(Iₙ(PRG), est automatiquement, et de manière classique, enregistrée dans la mémoire classique STK1. Enfin, lorsque dans l'exécution de l'instruction Iₙ (PRG) du programme, la routine Rₚ(Iₙ(PRG)) renvoit à l'exécution de la sous-routine SR_{q}(Rₚ(Iₙ(PRG))), l'adresse ADD[SR_{q+1}(Rₚ(Iₙ(PRG)))] de la sous-routine SR_{q+1}(Rₚ(Iₙ(PRG))), qui doit être exécutée à la suite de la routine SR_{q}(Rₚ(Iₙ(PRG))) est automatiquement, et de manière classique, enregistrée dans la première mémoire STK1. Toutefois, immédiatement après chaque enregistrement, l'exécution d'une fonction de sauvegarde notée SV sauvegarde chaque adresse dans la seconde mémoire STK2 et réinitialise la première mémoire STK1. La réinitialisation est effectuée en effaçant dans la première mémoire STK1 l'adresse sauvegardée dans la seconde mémoire STK2.

A la figure 1, cette fonction est écrite SV. A noter que, la première mémoire STK1 étant réinitialisée, le SIM est susceptible de recevoir une instruction Iₓ du mobile, externe au programme PRG. A noter par ailleurs que le pointeur de la mémoire STK2 pointe sur la dernière adresse enregistrée indiquant par la même l'adresse de la prochaine routine ou sous-routine à exécuter pour l'exécution de l'instruction Iₙ(PRG) du programme.

Si l'instruction classique Iₓ est reçue pendant l'exécution de l'instruction Iₙ(PRG) du programme, cette instruction Iₓ est exécutée immédiatement de manière classique, en utilisant la première mémoire STK1. A cet effet, lorsque l'exécution de la routine R_{y}(Iₓ) renvoit à l'exécution de la sous-routine SR_{z}(R_{y}(Iₓ)), l'adresse de la sous-routine SR_{z+1}(R_{y}(Iₓ)), qui doit être exécutée à la suite de la sous-routine SR_{z}(R_{y}(Iₓ)), est enregistrée dans la première mémoire STK1. Le pointeur pointe sur la dernière adresse enregistrée indiquant par la même l'adresse de la prochaine routine ou sous-routine à exécuter pour l'exécution de l'instruction Iₓ.

A la fin de l'exécution de l'instruction Iₓ, l'exécution du programme PRG reprend. A cet effet, une fonction RETRIEVAL permet alors de retrouver les adresses des routines ou sous-routines à effectuer pour la continuation de l'exécution dudit programme PRG. La fonction RETRIEVAL effectue une copie de l'ensemble des adresses contenues dans la seconde mémoire de sauvegarde d'adresses de retour STK2 dans la première mémoire de sauvegarde d'adresses de retour STK1, sans perte de l'ordonnancement desdites adresses. Le pointeur STKP1 de la première mémoire STK1 alors repositionné de manière à pointer la dernière adresse copiée dans ladite première mémoire STK1, l'instruction, la routine ou la sous-routine pointée par ledit pointeur STKP1 est alors exécutée et ainsi de suite.

A la fin de l'exécution du programme PRG, une fonction SCRIPTEND permet avantageusement de réinitialiser la première mémoire STK1 et de terminer ainsi l'exécution du programme PRG.

Ainsi, selon l'invention, le contexte du programme PRG n'est pas perdu lors de l'exécution d'une instruction Iₓ.

Dans un second mode de réalisation, l'exécution de la fonction de sauvegarde SV est déclenchée lorsque l'instruction classique Iₓ est reçue pendant l'exécution Iₙ(PRG) du programme. La fonction de sauvegarde SV sauvegarde, dans la seconde mémoire STK2, chaque adresse enregistrée dans la première mémoire STK1 et réinitialise la première mémoire STK1. La réinitialisation est effectuée en effaçant l'ensemble des adresses que comprend la première mémoire STK1, adresses sauvegardées dans la seconde mémoire STK2.

L'instruction classique Iₓ est alors exécutée de manière classique en utilisant la première mémoire STK1. A la fin de l'exécution de ladite instruction Iₓ, l'exécution du programme PRG reprend comme décrit précédemment.

Dans un troisième mode de réalisation, l'exécution de la fonction de sauvegarde SV est déclenchée à la fin d'une première routine R1(Iₙ(PRG)) qui s'exécute. La fonction de sauvegarde SV réinitialise la première mémoire STK1 et sauvegarde dans la seconde mémoire STK2 uniquement l'adresse ADD[R2(Iₙ(PRG)))] d'une deuxième routine R2(Iₙ(PRG))) de l'instruction Iₙ(PRG), deuxième routine qui doit être exécutée après une première routine R1(Iₙ(PRG))) de l'instruction Iₙ(PRG) qui s'exécute.

Dans le cas où la première routine R1(Iₙ(PRG))) comporte au moins une sous-routine SR_{q}[[R1(Iₙ(PRG)))]], la sauvegarde de l'adresse de la seconde routine R2(Iₙ(PRG))) dans la seconde mémoire STK2, s'effectue à la fin de l'exécution de la dernière sous-routine SRq[[Rp(Iₙ(PRG)))]] et avant de recevoir une instruction classique Iₓ ou autre instruction Iₙ(PRG) du programme. On notera que, dans ce cas, une instruction ne peut être reçue qu'à la fin de l'exécution complète d'une routine Rp(Iₙ(PRG))).

L'exemple suivant montrera bien en quoi consiste ce troisième mode de réalisation. Le module SIM communique avec un terminal M appelé également mobile. Ledit module reçoit des instructions dudit mobile et les exécute. Dans ce cas, un programme PRG est un ensemble d'instructions envoyées par le mobile M au module SIM et exécutées dans ledit module, ainsi qu'un ensemble de routines ou de fonctions associées aux dites instructions. Lorsque le programme s'exécute, une instruction Iₓ n'appartenant pas au programme PRG peut être envoyée par le mobile M. Cette instruction classique est appelée STATUS.

Le programme PRG comprend trois instructions appelées ENVELOPE, FETCH et TERMINALRESPONSE. Dans le module SIM, la première instruction ENVELOPE comprend deux routines appelées SELECTITEMCONSTRUCT et GETINPUTCONSTRUCT. La routine SELECTITEMCONSTRUCT comprend deux sous-routines SR11 et SR12.

Préférentiellement, après une instruction Iₙ(PRG) ou routine Rp(Iₙ(PRG)), le module SIM envoie au mobile M un état S relatif à l'exécution de ladite instruction ou routine, ou relatif la prochaine instruction ou routine à exécuter. Généralement, cet état S est envoyé au moyen d'une fonction de retour d'état STATUSWORD. Le programme PRG comporte ladite fonction de retour d'état STATUSWORD. Ladite fonction STATUSWORD utilise des variables contextuelles VAR se trouvant dans le module SIM.

Lorsque le programme PRG s'exécute, dans une première étape, la première instruction ENVELOPE est envoyée et exécutée dans le module de manière classique. La première routine SELECTITEMCONSTRUCT s'exécute ce qui entraîne l'exécution de la première sous-routine SR11 puis de la deuxième sous-routine SR12. A la fin de l'exécution de la deuxième sous-routine SR12, on retourne dans la première routine SELECTITEMCONSTRUCT et on déclenche l'exécution de la fonction de sauvegarde SV. Les adresses de la première instruction, de la première routine et de la fonction de sauvegarde sont dans la première mémoire STK1. La fonction de sauvegarde SV sauvegarde alors dans la seconde mémoire STK2 uniquement l'adresse ADD[(GETINPUTCONSTRUCT(ENVELOPE(PRG)))] de la deuxième routine GETINPUTCONSTRUCT de l'instruction ENVELOPE, deuxième routine qui doit être exécutée après la première routine SELECTITEMCONSTRUCT qui s'exécute. Bien entendu, si après une première routine, il n'y a aucune autre routine à exécuter, ladite fonction de sauvegarde SV ne sauvegarde aucune adresse dans la seconde mémoire STK2 et la fonction de sauvegarde SV réinitialise la première mémoire STK1.

Dans ce troisième mode de réalisation, la réinitialisation comprend les étapes selon lesquelles :
- on efface l'ensemble des adresses que comprend la première mémoire STK1,
- on enregistre dans la première mémoire STK1, l'adresse de la fonction de retour d'état STATUSWORD,
- on attribue des valeurs aux variables contextuelles VAR.

Ainsi, au retour de ladite première routine SELECTITEMCONSTRUCT, on exécute la routine de retour STATUSWORD. L'état 9120 est envoyé du module SIM au mobile M. Cet état est représenté par les valeurs attribuées aux variables contextuelles VAR.

Par la suite, dans une deuxième étape, une autre instruction peut être envoyée au module SIM et exécutée dans ledit module.

Si l'instruction classique STATUS est envoyée, elle est exécutée de manière classique en utilisant la première mémoire classique STK1.

Dans une troisième étape, la deuxième instruction FETCH appartenant au programme PRG est envoyée au module SIM et exécutée.

A la fin de son exécution, la troisième instruction TERMINALRESPONSE appartenant au programme PRG est envoyée au module SIM et exécutée. Comme décrit précédemment, la fonction de sauvegarde SV est déclenchée, le module SIM envoie un état 9110 au mobile M.

Par la suite, la deuxième routine GETINPUTCONSTRUCT doit être exécutée dans le module SIM. On déclenche la fonction de copie RETRIEVAL. La fonction RETRIEVAL effectue une copie de l'ensemble des adresses contenues dans la seconde mémoire de sauvegarde d'adresses de retour STK2 dans la première mémoire de sauvegarde d'adresses de retour STK1. Dans ce cas, l'ensemble ne comprend qu'une adresse qui est l'adresse de la deuxième routine GETINPUTCONSTRUCT de l'instruction ENVELOPE.

Le pointeur STKP1 de la première mémoire STK1 pointe ladite adresse copiée, la deuxième routine GETINPUTCONSTRUCT est alors exécutée.

Par la suite, comme décrit précédemment, une deuxième instruction FETCH est exécutée puis une troisième TERMINALRESPONSE et ainsi de suite.

A la fin de l'exécution du programme PRG, on déclenche la fonction SCRIPTEND qui permet avantageusement de réinitialiser la première mémoire STK1. La réinitialisation comprend les étapes selon lesquelles :
- on efface l'ensemble des adresses que comprend la première mémoire STK1,
- on enregistre dans la première mémoire STK1, l'adresse de la fonction de retour d'état STATUSWORD,
- on attribue des valeurs aux variables contextuelles VAR.

Par la suite, le module envoie un état 9000 au mobile M, le programme PRG est terminé.

## Revendications

1. Procédé de gestion de l'exécution concomitante, dans un dispositif à circuit intégré destiné à être intégré au sein d'un corps d'objet portatif, comportant une unité centrale de traitement et une mémoire, d'une part, d'un programme PRG comprenant une ou plusieurs instructions I₁(PRG),..., Iₙ(PRG),..., I_{N}(PRG), une des desdites instructions faisant appel à une ou plusieurs routines R₁(Iₙ(PRG)), ..., Rₚ(Iₙ(PRG)), ..., Rₚ(Iₙ(PRG)) et, le cas échéant, à une ou plusieurs sous-routines SR₁(Rₚ(Iₙ(PRG))), ..., SR_{q}(Rₚ(Iₙ(PRG))), ..., SR_{Q}(Rₚ(Iₙ(PRG))), et, d'autre part, d'une instruction Iₓ faisant appel à une ou plusieurs routines R₁(Iₓ), ..., R_{y}(Iₓ), ..., R_{Y}(Iₓ) et, le cas échéant, à une ou plusieurs sous-routines SR₁(R_{y}(Iₓ)), ..., SR_{z}(R_{y}(Iₓ)), ..., SR_{z}(R_{y}(Iₓ) selon lequel procédé, une adresse ADD[(Iₓ)] de l'instruction Iₓ, une adresse ADD[(R_{y}(Iₓ))] de la routine R_{y}(Iₓ) ou une adresse ADD[SR_{z}(R_{y}(Iₓ))] de la sous-routine SR_{z}(R_{y}(Iₓ)), est enregistrée dans une première mémoire de sauvegarde d'adresses de retour (STK1), caractérisé en ce que, pour l'exécution du programme PRG, une adresse ADD[Iₙ(PRG)] d'une instruction Iₙ(PRG), une adresse ADD[Rₚ(Iₙ(PRG))] d'une routine Rₚ(Iₙ(PRG)) ou une adresse ADD[SR_{q}(Rₚ(Iₙ(PRG)))] d'une sous-routine SR_{q}(Rₚ(Iₙ(PRG))), est enregistrée dans une seconde mémoire de sauvegarde d'adresses de retour (STK2), la première mémoire de sauvegarde d'adresses de retour (STK1) étant différente de la seconde mémoire de sauvegarde d'adresses de retour (STK2), et, en ce qu'on exécute une fonction de sauvegarde (SV), enregistrant, d'une part, une adresse ADD[Iₙ(PRG)] d'une instruction Iₙ(PRG), une adresse ADD[Rₚ(Iₙ(PRG))] d'une routine Rₚ(Iₙ(PRG)) ou ADD[SR_{q}(Rₚ(Iₙ(PRG)))] d'une sous-routine dans la seconde mémoire de sauvegarde d'adresses de retour (STK2), et, réinitialisant, d'autre part, la première mémoire de sauvegarde d'adresses de retour (STK1).

2. Procédé selon la revendication 1, caractérisé en ce que la première mémoire d'adresses de retour (STK1) est une mémoire classique, implémentée en hardware masque, intrinsèque au dispositif à circuit intégré.

3. Procédé selon l'une des revendications précédentes, caractérisé en ce que la seconde mémoire d'adresses de retour (STK2) est une mémoire logicielle, implémentée en masque logiciel, comprise dans une mémoire volatile (RAM) ou non volatile (EEPROM) du dispositif à circuit intégré.

4. Procédé selon l'une des revendications précédentes, caractérisé en ce que le programme PRG est rédigé en langage de haut niveau.

5. Procédé selon l'une des revendications précédentes, caractérisé en ce que la fonction de sauvegarde (SV) sauvegarde dans la seconde mémoire (STK2) uniquement l'adresse ADD[R2(Iₙ(PRG)))] d'une deuxième routine R2(Iₙ(PRG))) d'une instruction Iₙ(PRG), deuxième routine qui doit être exécutée après une première routine R1(Iₙ(PRG))) de l'instruction Iₙ(PRG) qui s'exécute.

6. Procédé selon les revendications précédentes, caractérisé en ce que ladite réinitialisation comprend une étape selon laquelle :
- on efface l'ensemble des adresses que comprend la première mémoire (STK1).

7. Procédé selon l'une des revendications précédentes, caractérisé en ce que le programme (PRG) comporte une fonction de retour d'état (STATUSWORD).

8. Procédé selon les revendications précédentes, caractérisé en ce que ladite réinitialisation comprend une étape supplémentaire selon laquelle :
- on enregistre dans la première mémoire (STK1), l'adresse de la fonction de retour d'état (STATUSWORD).

9. Procédé selon l'une des revendications précédentes, caractérisé en ce qu'il comporte une étape selon laquelle on exécute une fonction de copie (RETRIEVAL) de l'ensemble des adresses contenues dans la seconde mémoire de sauvegarde d'adresses de retour (STK2), dans la première mémoire de sauvegarde d'adresses de retour (STK1).

10. Procédé selon la revendication 9, caractérisé en ce que ledit ensemble des adresses ne comprend qu'une adresse.
